# EUROPÄISCHE PATENTANMELDUNG

(11) **EP 4 082 723 A1**
(43) Veröffentlichungstag der Anmeldung: **02.11.2022**
(21) Anmeldenummer: 22160082.8
(22) Anmeldetag: 03.03.2022
(51) Int. Cl.: B25J 9/00, B25J 15/00, B25J 19/00, B25J 9/16, B21D 43/05

(54) **VERFAHREN UND VORRICHTUNG ZUR MONTAGE EINER BLECHWERKSTÜCKGREIFEINRICHTUNG**

(30) Priorität: 26.04.2021 DE 102021204134
(71) Anmelder: VOLKSWAGEN AG, 38440 Wolfsburg (DE)
(72) Erfinder: Kotzian, Mathias, 38446 Wolfsburg (DE); Bäume, Dr. Tobias, 38162 Cremlingen (OT Schandelah) (DE); Bozkurt, Ahmet, 38110 Braunschweig (DE); Kappey, Dr. Jens, 38448 Wolfsburg (DE); Schulz, Normann, 39175 Wahlitz (DE); Kosak, Kim-Daniel, 38471 Rühen (DE)

(57) **Zusammenfassung**

Die Erfindung betrifft ein Verfahren zur Montage einer Blechwerkstückgreifeinrichtung (1), wobei mehrere Greifelemente (3) an einer Trägerkonstruktion (2) befestigt werden. Die Erfindung sieht vor, dass die Trägerkonstruktion (2) mithilfe eines ersten Roboters (20) gehalten wird und die an der Trägerkonstruktion (2) zu befestigenden Greifelemente (3) mithilfe eines zweiten Roboters (30) zugeführt werden, wobei der erste Roboter (20) und der zweite Roboter (30) aufeinander abgestimmte Bewegungen ausführen, um die Trägerkonstruktion (2) und das jeweils als nächstes zu befestigende Greifelement (3) in eine Relativstellung zu bringen, in der einerseits die exakte Befestigungsposition (A) und Ausrichtung (B) des zu befestigenden Greifelements (3) vorgegeben werden und in der andererseits für eine assistierende Person (P) wenigstens eine vorgegebene ergonomische Bedingung (H) erfüllt ist.

Die Erfindung betrifft ferner eine entsprechende Vorrichtung (10).

## Beschreibung

Die Erfindung betrifft ein Verfahren und eine Vorrichtung zur Montage einer Blechwerkstückgreifeinrichtung.

In modernen Pressenanlagen für die Blechbearbeitung, die eine oder mehrere Pressen umfassen, werden die Blechwerkstücke in der Regel automatisiert gehandhabt, was insbesondere das Einlegen, Entnehmen und Weitertransportieren der Blechwerkstücke betrifft. Dies kann mithilfe von feedersystem- oder robotergeführten Blechwerkstückgreifeinrichtungen bewerkstelligt werden, die individuell (d. h. werkstückgebunden) auf das zu handhabende Blechwerkstück abgestimmt und entsprechend aufgebaut sind. Eine solche Blechwerkstückgreifeinrichtung weist für gewöhnlich eine Trägerkonstruktion auf, an der blechwerkstückspezifisch mehrere Greifelemente, wie bspw. Klemmgreifer, Sauggreifer, Magnetgreifer und dergleichen, angeordnet sind. Eine solche Werkstückgreifeinrichtung kann auch zur Handhabung anderer schalenartiger Werkstücke, wie bspw. flächiger CFK-Werkstücke, verwendet werden.

Die DE 10 2014 204 366 A1 beschreibt ein Verfahren und eine Vorrichtung zum Aufbau einer werkstückbezogenen Werkstückgreifeinrichtung für die Pressenautomatisierung, wobei werkstückspezifische Komponenten an einem Träger befestigt werden. Die exakten Positionen und Ausrichtungen der am Träger zu befestigenden werkstückspezifischen Komponenten werden mithilfe eines Bewegungsautomaten, insbesondere Roboters, angezeigt.

Mit der Erfindung soll ausgehend von der DE 10 2014 204 366 A1 die Benutzerfreundlichkeit verbessert werden.

Dies gelingt mit dem erfindungsgemäßen Verfahren des Patentanspruchs 1 und mit der erfindungsgemäßen Vorrichtung des nebengeordneten Patentanspruchs. Mit einem weiteren nebengeordneten Patentanspruch erstreckt sich die Erfindung auch auf eine bestimmte Verwendung, nämlich für Reparaturen oder Umbauten. Zusätzliche Merkmale der Erfindung ergeben sich analog für alle Erfindungsgegenstände aus den abhängigen Patentansprüchen, der nachfolgenden Erfindungsbeschreibung (wobei dies ausdrücklich auch Merkmale einschließt, die als "beispielsweise", "bevorzugt", "insbesondere" etc. beschrieben sind) und der Zeichnung.

Das erfindungsgemäße Verfahren zur Montage einer Blechwerkstückgreifeinrichtung, wobei, insbesondere nacheinander, mehrere Greifelemente an einer Trägerkonstruktion befestigt werden, sieht vor, dass die Trägerkonstruktion mithilfe eines ersten Roboters gehalten wird und die an dieser Trägerkonstruktion zu befestigenden Greifelemente mithilfe eines zweiten Roboters zugeführt werden. Dabei ist vorgesehen, dass der erste Roboter und der zweite Roboter aufeinander abgestimmte Bewegungen ausführen, um die Trägerkonstruktion und das jeweils als nächstes zu befestigende Greifelement in eine Relativstellung bzw. Konstellation zu bringen (womit quasi definierte Relativpositionen zwischen der Trägerkonstruktion und dem Greifelement gemeint sind), in der einerseits die exakte Befestigungsposition und die exakte Ausrichtung, insbesondere die Schwenkung bzw. Neigung (die bspw. durch eine Mittenachse des Greifelements definiert werden kann), des an der Trägerkonstruktion zu befestigenden Greifelements vorgegeben werden und in der andererseits für eine assistierende Person, die insbesondere die Befestigung des betreffenden Greifelements an der Trägerkonstruktion manuell vornimmt bzw. ausführt, wenigstens eine vorgegebene ergonomische Bedingung erfüllt ist.

Bei der Trägerkonstruktion handelt es sich insbesondere um eine aus Rohren, Balken bzw. Schienen, Profilträgern und dergleichen gebildete Rahmenstruktur, insbesondere eine Baumstruktur, an der die Greifelemente positions- und ausrichtungsgenau befestigt werden. Bei den Greifelementen handelt es sich insbesondere um Klemmgreifer, Sauggreifer, Magnetgreifer und dergleichen.

Die Erfindung sieht vor, dass zwei Roboter verwendet werden, von denen einer die Trägerkonstruktion hält und bewegt und der andere die zu befestigenden Greifelemente hält und bewegt (die Roboter sind hierzu mit entsprechenden Halteeinrichtungen bzw. Halterungen ausgestattet), wobei für das jeweils nächste zu befestigende Greifelement von beiden Robotern durch Schwenk-, Dreh- und/oder Verfahrbewegungen lagerichtige Relativpositionen angefahren werden können, in denen die exakte bzw. genaue Befestigungsposition und Ausrichtung des an der Trägerkonstruktion zu befestigenden Greifelements vorgegeben werden, jedoch unter Berücksichtigung wenigstens einer ergonomischen Bedingung für die assistierende bzw. manuell tätige Person. Bei dieser ergonomischen Bedingung handelt es sich beispielsweise um eine vorgegebene Arbeitshöhe, insbesondere Sitzhöhe, eine optimale händische Zugänglichkeit zur Befestigungsstelle, eine bestmögliche ergonomische Körperhaltung beim Befestigen des Greifelements (bspw. ohne kniend, gebeugt und/oder gebückt ausgeführte Bewegungen), ein optimaler Lichteinfall an der Befestigungsstelle und/oder dergleichen. Bevorzugt kann wenigstens eine ergonomische Bedingung für die assistierende bzw. manuell tätige Person vorher individuell festgelegt bzw. ausgewählt werden, insbesondere von der betroffenen Person selbst.

Die zu befestigenden Greifelemente werden bevorzugt einzeln zugeführt. Damit ist insbesondere gemeint, dass der zweite Roboter das jeweils nächste zu befestigende Greifelement aufnimmt oder annimmt und in die dafür vorgesehene Relativposition fährt, wo dieses dann an der Trägerkonstruktion befestigt werden kann. Danach kann durch Anweisung bzw. per Freigabebefehl (durch die arbeitende Person) das nächste zu befestigende Greifelement auf- oder angenommen und zu der dafür vorgesehenen Befestigungsposition gefahren werden.

Die beiden Roboter können basierend auf einem CAD-Datensatz der Blechwerkstückgreifeinrichtung bewegt werden, wobei die Befestigungspositionen für die Anbindung bzw. Befestigung der Greifelemente an der Trägerkonstruktion und deren Ausrichtungen aus dem CAD-Datensatz der (zuvor konstruierten) Blechwerkstückgreifeinrichtung quasi ausgelesen werden können. Alternativ können beide Roboter basierend auf einem CAD-Datensatz der Trägerkonstruktion und einem CAD-Datensatz des mit der Blechwerkstückgreifeinrichtung zu greifenden Blechwerkstücks (mit bekannten bzw. vorgegebenen Befestigungspositionen und Ausrichtungen für die Greifelemente) bewegt werden. Der Aufbau der Trägerkonstruktion kann durch Ausführen einer Routine auch angelernt werden. Anstelle eines CAD-Datensatzes des zu greifenden Blechwerkstücks kann auch ein CAD-Datensatz eines mit der Blechwerkstückgreifeinrichtung zu bedienenden Fertigungswerkzeugs (bspw. ein Tiefziehwerkzeug oder ein Schneidwerkzeug) verwendet werden. Bevorzugt werden auch CAD-Daten der zu befestigenden Greifelemente verwendet, die bspw. aus einer digitalen Bibliothek importiert werden können.

Um Kollisionen zwischen den beiden Robotern oder zwischen der Trägerkonstruktion und einem daran zu befestigenden Greifelement zu vermeiden, kann vorab mittels einer Durchgängigkeitssimulation eine Freigängigkeitsbetrachtung durchgeführt werden. Die Bewegungen beider Roboter können auch von einem Kollisionsüberwachungssystem, insbesondere einem kameragestützten Kollisionsüberwachungssystem, überwacht werden, um Kollisionen zu vermeiden.

Die jeweilige Relativstellung (zwischen dem zu befestigenden Greifelement und der Trägerkonstruktion) kann mithilfe einer am zweiten Roboter befestigten Messeinrichtung überwacht werden. Bei dieser Messeinrichtung handelt es sich insbesondere um eine Kamera. An der Trägerkonstruktion können codierte Bezugsmarken (Referenzmarken) angebracht sein, die von der Messeinrichtung bzw. Kamera erfasst werden können. Dadurch kann überprüft werden, ob sich das zu befestigende Greifelement in der richtigen Position (d. h. in der dafür vorgesehenen Befestigungsposition) befindet und insbesondere auch die richtige Ausrichtung aufweist. Ergänzend können die zu befestigenden Greifelemente mit Barcodes oder dergleichen versehen sein, sodass automatisch auch ein Abgleich (zwischen Greifelement und aktueller Position) erfolgen kann.

Die erfindungsgemäße Vorrichtung zur Montage einer Blechwerkstückgreifeinrichtung umfasst zumindest folgende Komponenten bzw. Einrichtungen:
- einen ersten Roboter, der die Trägerkonstruktion hält (und bewegt);
- einen zweiten Roboter, der die zu befestigenden Greifelemente, insbesondere einzeln, zur Trägerkonstruktion führt;
- eine Steuereinrichtung, die beide Roboter derart steuert, dass die Trägerkonstruktion und das jeweils als nächstes zu befestigende Greifelement in eine Relativstellung gebracht werden, in der einerseits die exakte Befestigungsposition und die exakte Ausrichtung des zu befestigenden Greifelements vorgegeben werden und in der andererseits für eine assistierende Person wenigstens eine vorgegebene ergonomische Bedingung erfüllt ist.

Bevorzugt handelt es sich bei beiden Robotern um stationäre Knickarm- bzw. Gelenkarmroboter. Der zweite Gelenkarmroboter kann kleiner bzw. für eine niedrigere Traglast ausgebildet sein. Bei der Steuereinrichtung kann es sich um die Steuereinrichtung eines der beiden Roboter handeln, die zugleich auch den anderen Roboter ansteuert (bspw. in einer primary-secondary-Konfiguration), oder um eine separate Steuereinrichtung, die beide Roboter ansteuert. Bevorzugt ist die Steuereinrichtung dazu ausgebildet, auf Basis importierter CAD-Daten (s. o.) zunächst eine optimale Abfolge für die Greifelementbefestigung zu bestimmen (dies kann auch manuell erfolgen) und daraufhin entsprechende Steuerbefehle oder -vorgaben für die Bewegung der beiden Roboter und insbesondere ein Programm zur Bewegungsabfolge beider Roboter zu generieren. Insbesondere handelt es sich bei der Steuereinrichtung um eine softwarebasierte Datenverarbeitungseinrichtung.

Der zweite Roboter, insbesondere Gelenkarmroboter, kann einen, insbesondere am freien Ende des Gelenkarms angeordneten, Stufendorn oder dergleichen aufweisen, auf den das nächste zu befestigende Greifelement, insbesondere ein Sauggreifer, einfach aufsteckbar (und auch wieder abziehbar) ist.

Die Erfindung ermöglicht den Aufbau bzw. die Montage einer Blechwerkstückgreifeinrichtung ohne ein physisches Muster bzw. Modell des zu greifenden Blechwerkstücks (oder dergleichen). Somit kann die Blechwerkstückgreifeinrichtung parallel zum Aufbau des zu bedienenden Fertigungswerkzeugs montiert werden. Aufgrund der genauen Positionierung und Ausrichtung ist keine Nachjustierung der Greifelemente erforderlich. Die Erfindung kann aber nicht nur für den Neuaufbau einer Blechwerkstückgreifeinrichtung verwendet werden, sondern kann auch für Reparaturen und Umbauten einer vorhandenen Blechwerkstückgreifeinrichtung verwendet werden. Die Erfindung bietet ferner den Vorteil, dass die (neu) aufgebaute bzw. montierte, umgebaute oder reparierte Blechwerkstückgreifeinrichtung exakt mit den dafür verwendeten CAD-Daten übereinstimmt, wobei diese CAD-Daten auch für die Steuerung der Fertigungsroboter bzw. Feedersysteme verwendet werden können, sodass dann in der Fertigung Kollisionen oder ähnliche Fehler vermieden werden können (Gefahrenvermeidung).

Nachfolgend wird die Erfindung in nicht einschränkender Weise anhand der Zeichnung näher erläutert.

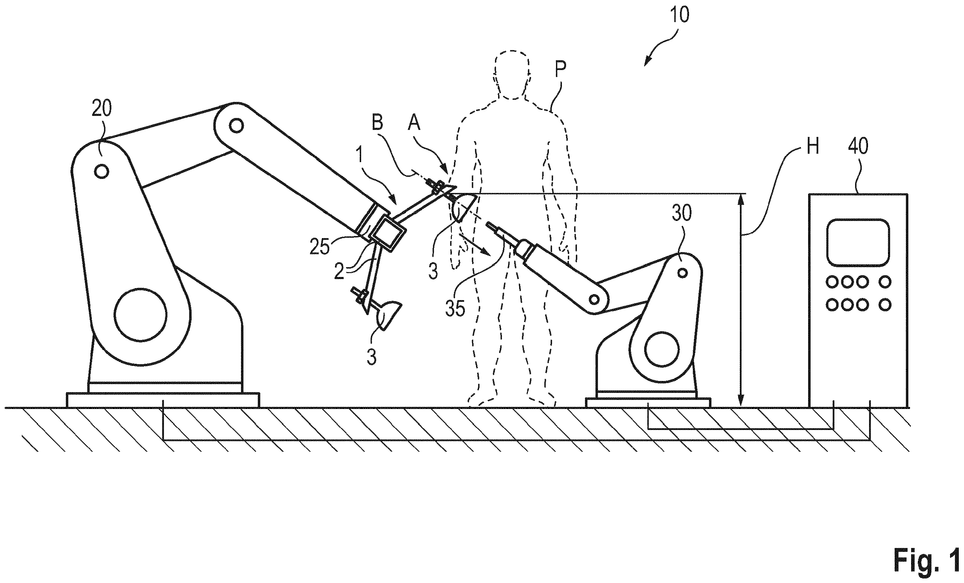

- Fig. 1: zeigt schematisch eine erfindungsgemäße Vorrichtung zur Montage einer Blechwerkstückgreifeinrichtung.

Die Vorrichtung 10 umfasst einen ersten Roboter 20, der die Trägerkonstruktion 2 der zu montierenden Blechwerkstückgreifeinrichtung 1 hält und im Raum bewegt. Die zu montierende Blechwerkstückgreifeinrichtung 1 kann bspw. eine Fläche von 2,5 m × 5,0 m abdecken. Ferner ist ein zweiter Roboter 30 umfasst, der die zu befestigenden Greifelemente 3 einzeln zur Trägerkonstruktion 2 führt. Bei beiden Robotern 20, 30 handelt es sich um stationäre Gelenkarmroboter, wobei der zweite Roboter 30 kleiner ausgebildet ist als der erste Roboter 20. Der erste Roboter 20 weist am freien Ende seines Gelenkarms eine Halterung 25 oder dergleichen zur Aufnahme der Trägerkonstruktion 2 auf. Der zweite Roboter 30 weist am freien Ende seines Gelenkarms einen Stufendorn 35 auf, auf den das jeweils als nächstes zu befestigende Greifelement 3 aufgesteckt wird. Nach dem Befestigen des Greifelements 3 an der Trägerkonstruktion 2 kann der Stufendorn 35 zurückgezogen werden, wie mit dem Pfeil veranschaulicht, wodurch das befestigte Greifelement 3 vom Stufendorn 35 abgezogen wird.

Die Vorrichtung 10 umfasst ferner eine Steuereinrichtung 40, welche beide Roboter 20, 30 derart steuert, dass die Trägerkonstruktion 2 und das nächste zu befestigende Greifelement 3 in eine Relativstellung (womit genau genommen aufeinander abgestimmte bzw. zueinander definierte Relativpositionen gemeint sind) gebracht werden, in der einerseits die exakte Befestigungsposition A und Ausrichtung B des zu befestigenden Greifelements 3 relativ zur Trägerkonstruktion 2 vorgegeben werden und in der andererseits für eine assistierende Person P, die hier die Befestigung der Greifelemente 3 an der Trägerkonstruktion 2 manuell vornimmt, mehrere vorgegebene ergonomischen Bedingungen (wenigstens jedoch eine ergonomische Bedingung) erfüllt sind. Bei diesen ergonomischen Bedingungen handelt es sich bspw. um eine vorgegebene Arbeitshöhe H für eine stehende oder gegebenenfalls auch sitzende Tätigkeit, eine optimale händische Zugänglichkeit zur Befestigungsstelle (hier von oben, sodass keine gebückte oder kniende Körperhaltung erforderlich ist) und/oder ein optimaler bzw. bestmöglicher Lichteinfall (an der Befestigungsstelle).

Die Roboter 20, 30 können gleichzeitig, nacheinander oder abwechselnd bewegt werden, um die Trägerkonstruktion 2 und das jeweils als nächstes zu befestigende Greifelement 3 in die vorgesehene Relativstellung zu bewegen, wobei gegebenenfalls auch vorgesehen sein kann, dass die Trägerkonstruktion 2 für längere Zeit, bis mehrere Greifelemente 3 befestigt sind, ihre Raumlage beibehält. Weitere Details und Ausführungsmöglichkeiten der Erfindung sind oben beschrieben.

### Bezugszeichenliste

- 1: Blechwerkstückgreifeinrichtung
- 2: Trägerkonstruktion
- 3: Greifelement
- 10: Vorrichtung
- 20: erster Roboter
- 25: robotergeführte Halterung
- 30: zweiter Roboter
- 35: Stufendorn
- 40: Steuereinrichtung
- A: Befestigungsposition
- B: Ausrichtung
- H: Arbeitshöhe
- P: Person

## Patentansprüche

1. Verfahren zur Montage einer Blechwerkstückgreifeinrichtung (1), wobei mehrere Greifelemente (3) an einer Trägerkonstruktion (2) befestigt werden,
**dadurch gekennzeichnet, dass**
die Trägerkonstruktion (2) mithilfe eines ersten Roboters (20) gehalten wird und die an der Trägerkonstruktion (2) zu befestigenden Greifelemente (3) mithilfe eines zweiten Roboters (30) zugeführt werden, wobei der erste Roboter (20) und der zweite Roboter (30) aufeinander abgestimmte Bewegungen ausführen, um die Trägerkonstruktion (2) und das jeweils als nächstes zu befestigende Greifelement (3) in eine Relativstellung zu bringen, in der einerseits die exakte Befestigungsposition (A) und Ausrichtung (B) des zu befestigenden Greifelements (3) vorgegeben werden und in der andererseits für eine assistierende Person (P) wenigstens eine vorgegebene ergonomische Bedingung (H) erfüllt ist.

2. Verfahren nach Anspruch 1,
**dadurch gekennzeichnet, dass**
beide Roboter (20, 30) basierend auf einem CAD-Datensatz der Blechwerkstückgreifeinrichtung (1) bewegt werden.

3. Verfahren nach Anspruch 1,
**dadurch gekennzeichnet, dass**
beide Roboter (20, 30) basierend auf einem CAD-Datensatz der Trägerkonstruktion (2) und einem CAD-Datensatz des mit der Blechwerkstückgreifeinrichtung (1) zu greifenden Blechwerkstücks bewegt werden.

4. Verfahren nach einem der vorhergehenden Ansprüche,
**dadurch gekennzeichnet, dass**
die Bewegungen beider Roboter (20, 30) von einem Kollisionsüberwachungssystem überwacht werden.

5. Verfahren nach einem der vorhergehenden Ansprüche,
**dadurch gekennzeichnet, dass**
die Relativstellung mithilfe einer am zweiten Roboter (30) befestigten Messeinrichtung überwacht wird.

6. Vorrichtung (10) zur Montage einer Blechwerkstückgreifeinrichtung (1), wobei mehrere Greifelemente (3) an einer Trägerkonstruktion (2) befestigt werden, umfassend:
- einen ersten Roboter (20), der die Trägerkonstruktion (2) hält;
- einen zweiten Roboter (30), der die zu befestigenden Greifelemente (3) zur Trägerkonstruktion (2) führt;
- eine Steuereinrichtung (40), die beide Roboter (20, 30) derart steuert, dass die Trägerkonstruktion (2) und das jeweils als nächstes zu befestigende Greifelement (3) in eine Relativstellung gebracht werden, in der einerseits die exakte Befestigungsposition (A) und Ausrichtung (B) des zu befestigenden Greifelements (3) vorgegeben werden und in der andererseits für eine assistierende Person (P) wenigstens eine vorgegebene ergonomische Bedingung (H) erfüllt ist.

7. Vorrichtung (10) nach Anspruch 6,
**dadurch gekennzeichnet, dass**
beide Roboter (20, 30) als stationäre Gelenkarmroboter ausgebildet sind.

8. Vorrichtung (10) nach Anspruch 6 oder 7,
**dadurch gekennzeichnet, dass**
der zweite Roboter (30) einen Stufendorn (35) aufweist, auf den das jeweils als nächstes zu befestigende Greifelement (3) aufsteckbar ist.

9. Verwendung einer Vorrichtung (10) gemäß einem der Ansprüche 6 bis 8 für die Reparatur oder den Umbau einer Blechwerkstückgreifeinrichtung (1).
